# EUROPÄISCHE PATENTANMELDUNG

(11) **EP 4 415 256 A1**
(43) Veröffentlichungstag der Anmeldung: **14.08.2024**
(21) Anmeldenummer: 24153362.9
(22) Anmeldetag: 23.01.2024
(51) Int. Cl.: H02S 10/12, F03D 9/00, F03D 9/25, F03D 13/20, H02S 20/32

(54) **KOMBINIERTE WIND- UND SOLARANLAGE**

(30) Priorität: 30.01.2023 DE 102023102123
(71) Anmelder: Lang Technik GmbH, 73271 Holzmaden (DE)
(72) Erfinder: Lang, Günter, 73249 Wernau (DE)
(74) Vertreter: Rüger Abel Patentanwälte PartGmbB

(57) **Zusammenfassung**

Die erfindungsgemäße Energiegewinnungsanlage (10) ist sowohl zur Windenergienutzung als auch zur Solarenergienutzung eingerichtet. Sie weist als zentrales Element einen horizontalen Träger (16) auf, der an seinen beiden Enden Windgeneratoren (12, 13) trägt, deren Drehachsen parallel zueinander und rechtwinklig zu dem Träger (16) orientiert sind. Vorzugsweise sind die Drehachsen der Rotoren somit in fester räumlicher Beziehung zu dem Träger (16) orientiert. Ein Solarpanel (11) ist hingegen zwischen den beiden Windenergiegeneratoren (12, 13) kippbar an dem Träger (16) gelagert, sodass es nach der Höhe der Sonne ausgerichtet werden kann. Überwiegt die mit den Windgeneratoren (12, 13) erzielbare elektrische Leistung stellt die Steuereinrichtung (30) das Solarpanel (11) horizontal und dreht den Träger (16) quer zum Wind. Überwiegt hingegen die mit dem Solarpanel (11) erzielbare elektrische Leistung wird der Träger (16) nach dem Sonnenstand und die Neigung des Solarpanels 11 nach der Sonnenhöhe eingerichtet. Die Windgeneratoren (12, 13) können in diesem Zustand weiterlaufen oder wie es bevorzugt wird stillgesetzt werden.

## Beschreibung

Die Erfindung betrifft eine Energiegewinnungsanlage, die darauf eingerichtet ist, sowohl Wind als auch Sonne zur Energiegewinnung zu nutzen. Insbesondere betrifft die Erfindung eine Energiegewinnungsanlage zur großflächigen Wind- und Solarnutzung.

Die Kombination der Nutzung von Windenergie und Solarenergie ermöglicht die Energiegewinnung auch dann, wenn die Sonne nicht scheint oder der Wind nicht weht, wenn wenigstens eins von beiden vorhanden ist.

Die DE 94 10 139 U1 schlägt dazu ein nach der Sonne ausrichtbares Fertighaus vor, das eine Solarwand und ein Solardach aufweist und zu dem mit einer über dem Dachfirst montierten Windkraftanlage versehen ist. Bei Nacht oder Bewölkung soll das Fertighaus mit der fensterlosen Solarwand zum Wind gedreht werden, um Wärmeabstrahlung zu minimieren und Windkraft optimal zu nutzen. Ist Sonne vorhanden, soll das Fertighaus mit der Solarwand und dem Solardach zur Sonne gedreht werden, damit eine möglichst rechtwinklige Anstrahlung erfolgt.

Weiter beschreibt die DE 196 15 953 A1 eine Anlage zur Solar- und Wind-Energiegewinnung. Diese Anlage umfasst eine umfangreiche Trägeranordnung, an deren Spitze eine nach dem Wind ausrichtbare Windkraftanlage und an der Solarpaneele vorgesehen sind, die unabhängig von der Ausrichtung der Windkraftanlage zur Sonne drehbar sind.

Es ist Aufgabe der Erfindung, eine einfache und robuste Anlage zur kombinierten Sonnen- und Windenergienutzung zu schaffen.

Diese Aufgabe wird mit der Energiegewinnungsanlage nach Anspruch 1 gelöst.

Die erfindungsgemäße Energiegewinnungsanlage weist einen um eine Vertikalachse drehbar gelagerten Träger auf, der ein Solarpanel und zu beiden Seiten desselben Windgeneratoren mit horizontaler oder vertikaler Drehachse trägt. Das Solarpanel ist um eine Horizontalachse schwenkbar an dem Träger gelagert. Durch Drehung um beide Achsen kann das Solarpanel zur Sonne ausgerichtet werden. Beim Schwenken des Solarpanels um seine Horizontalachse wird der Träger nicht geschwenkt, sodass die Windgeneratoren nicht mit dem Solarpanel mitgeschwenkt werden. Die Drehung um die Vertikalachse hingegen vollführen das Solarpanel und die Windgeratoren gemeinsam.

Durch die Anordnung der beiden Windgeneratoren an den Enden des Trägers befindet sich dieser im Gleichgewicht - asymmetrische Belastungen werden vermieden. Ebenso ist das Solarpanel vorzugsweise etwa mittig über dem Träger angeordnet, sodass sich sowohl der Träger als auch das Solarpanel jeweils für sich im Gleichgewicht befinden. Auch dies vereinfacht den Aufbau und führt zu einer statischen Entlastung insbesondere der Drehlagerung an der Spitze eines vertikalen Turms oder Masts, an dem die Energiegewinnungsanlage angeordnet ist.

Zu der erfindungsgemäßen Energiegewinnungsanlage gehört eine Steuerungseinrichtung, die zur Steuerung der Schwenkbewegungspositionierung des Trägers um die Vertikalachse und auch zur Steuerung und Positionierung des Solarpanels um die Horizontalachse eingerichtet ist. Vorzugsweise ist die Steuerungseinrichtung dazu eingerichtet, den Träger und das Solarpanel nach dem Sonnenstand und der Windrichtung auszurichten. Dabei kann die Steuerungseinrichtung so ausgebildet sein, dass sie den Träger und das Solarpanel nach dem Sonnenstand ausrichtet, wenn der erzielbare Solarertrag den erzielbaren Windertrag überschreitet. Sie kann weiter dazu ausgerichtet sein, den Träger nach der Windrichtung auszurichten, wenn der erzielbare Windertrag den erzielbaren Solarertrag überschreitet. Sie kann weiter dazu ausgerichtet sein, das Solarpanel in Horizontallage zu bringen, wenn der Windertrag den erzielbaren Solarertrag überschreitet. Schließlich kann die Steuereinrichtung auch dazu eingerichtet sein, den Träger und das Solarpanel in eine vermittelnde Position zu überführen, wenn die Windrichtung und die Richtung der einfallenden Sonneneinstrahlung in einem vorgegebenen Winkelbereich von zum Beispiel 10°, 20°, 30° oder 40° zueinander liegen.

Durch die Positionierung des Solarpaneels in Horizontallage bei vorwiegender Windenergienutzung eignet sich die erfindungsgemäße Energiegewinnungsanlage insbesondere zum Aufbau von Wind- und Solarparks mit mehreren oder vielen solcher Energiegewinnungsanlagen. Die in Horizontallage positionierten Solagpaneele behindern den Wind nicht und lenken ihn auch nicht störend ab.

Der Begriff Solarertrag bezeichnet die aktuelle oder über einen bestimmten Zeitraum hinweg unter Umwandlung der Energie des Sonnenlichts erzielbare elektrische Leistung. Der Begriff Windertrag bezeichnet die aktuelle oder über einen bestimmten Zeitraum hinweg unter Ausnutzung der Energie des Windes erzielbare elektrische Leistung.

Bei einer bevorzugten Ausführungsform weisen die Windgeneratoren Rotoren mit horizontaler Drehachse auf, wobei die entsprechenden Generatorköpfe über Vertikalstreben mit den Enden des Trägers unverdrehbar verbunden sind. Dies grenzt den mechanischen Aufwand ein und gestattet eine einfache und sichere Regelung der Anlage. Es ist jedoch auch möglich, die Generatorköpfe um eine zweite Vertikalachse drehbar an der Vertikalstrebe oder dem Träger zu lagern. Dies erhöht den mechanischen Aufwand, gestattet aber die Ausrichtung der Windgeneratoren zum Wind, während das Solarpanel zur Sonne ausrichtbar ist. Solche Gestaltungen sind für Standorte geeignet, an denen häufig zugleich Sonnenschein und nutzbare Windstärke zu erwarten sind.

Die Windgeneratoren sind vorzugsweise in einem solchen seitlichen Abstand zu dem Solarpanel angeordnet, dass die Rotorflügel keinen das Solarpanel überstreichenden Schatten werfen, wenn das Solarpanel zur Sonne ausgerichtet ist. Dies gilt insbesondere für drei- und mehrflügelige Rotoren. Es ist auch möglich, Rotoren mit lediglich zwei Flügeln vorzusehen. Diese können, wenn die Energiegewinnungsanlage im Solarmodus nur Sonnenenergie auffängt, vertikal gestellt und fixiert werden, sodass der Schatten der Rotorflügel am Solarpanel vorbeigeht. Bei einer solchen Ausführungsform können die Vertikalstreben der Windgeneratoren in einem Abstand zu dem Solarpanel angeordnet sein, der geringer ist als der Rotordurchmesser, ohne dass die Gefahr des Schattenwurfs auf das Solarpanel besteht.

Die Rotoren der beiden Windgeneratoren der Energiegewinnungsanlage können auf eine gleichsinnige Rotation ausgelegt sein. Dies vereinfacht den Aufbau und erhöht die Anzahl der Gleichteile. Alternativ kann vorgesehen sein, die beiden Windgeneratoren auf gegensinnige Rotordrehzahl auszulegen. Daraus können sich Vorteile hinsichtlich des Gesamtwirkungsgrads eines Wind- und Solarparks ergeben, der aus einer Vielzahl von Energiegewinnungsanlagen der erfindungsgemäßen Bauart besteht.

Die Horizontalstellung eines Solarpanels bei Windbetrieb der erfindungsgemäßen Energiegewinnungsanlage minimiert die windbremsende Wirkung des Solarpanels und kommt damit dem Energieertrag der Energiegewinnungsanlage zugute. Dies gilt wiederum insbesondere bei Wind- und Solarparks, die aus mehreren erfindungsgemäßen Energiegewinnungsanlagen bestehen.

Zu der Erfindung kann auch das Verfahren nach Anspruch 13 beitragen. Zu dem Verfahren gehört der Schritt der Erfassung der Intensität (Leistungsdichte) der Sonnenstrahlung sowie der Windstärke (Windgeschwindigkeit) und im weiteren Schritt die Ermittlung des daraus erzielbaren Solarertrags und des erzielbaren Windertrags. Zu dem Verfahren gehört weiter die Entscheidung, ob Solarbetrieb oder ob Windbetrieb vorteilhaft ist. Wenn der Solarertrag überwiegt, wird die Anlage in Solarbetrieb überführt, wobei das Solarpanel nach der Sonne orientiert wird. Wenn der Windertrag überwiegt, wird die Energiegewinnungsanlage nach dem Wind orientiert. Bevorzugter Weise wird das Solarpanel dabei in Horizontallage überführt.

Wenn sowohl Solarertrag als auch Windertrag erzielbar sind, kann die Energiegewinnungsanlage hybrid als auch die Windgeneratoren Strom liefern.

Weitere Einzelheiten vorteilhafter Ausführungsformen der Erfindung sind Gegenstand der Beschreibung sowie der zugehörigen Zeichnung und von Ansprüchen.

In der Zeichnung sind Ausführungsformen der Erfindung veranschaulicht. Es zeigen:
Figur 1 Eine erfindungsgemäße Energiegewinnungsanlage, in schematischer perspektivischer Darstellung,
Figur 2 die Energiegewinnungsanlage nach Figur 1, in schematischer und teilweiser geschnittener Seitenansicht,
Figur 3 die Energiegewinnungsanlage nach Figur 1 und 2, in Draufsicht,
Figur 4 die Energiegewinnungsanlage nach den Figuren 1 bis 3, in etwas abgewandelter Form in Vorderansicht,
Figur 5 und 6 Einsatzfälle der Energiegewinnungsanlage nach Figur 1 bis 4,
Figur 7 eine Energiegewinnungsanlage ähnlich Figur 1 in abgewandelter Ausführungsform, in schematisierter, perspektivischer Ansicht.

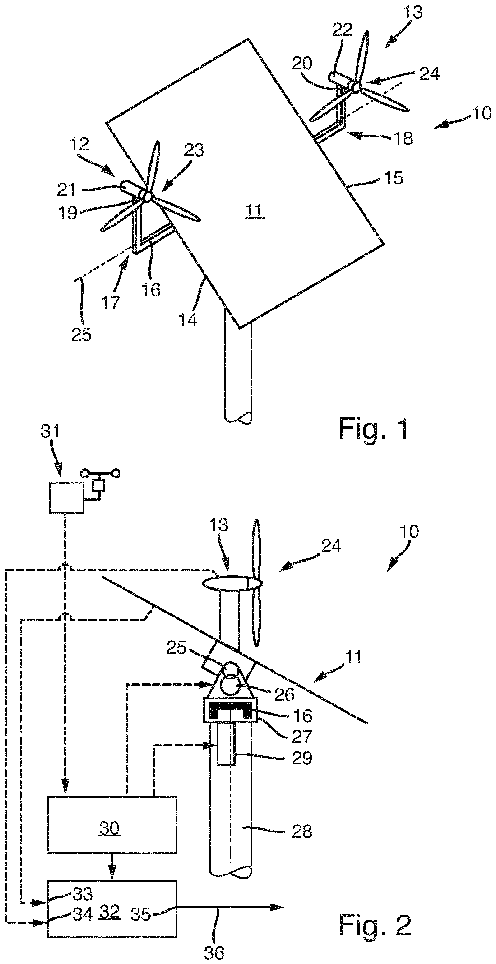

Figur 1 veranschaulicht eine erfindungsgemäße Energiegewinnungsanlage 10, deren Hauptkomponenten ein Solarpanel 11 und zwei Windgeneratoren 12, 13 sind. Das Solarpanel 11 kann zum Beispiel rechteckig ausgebildet sein und zwei Seitenkanten 14, 15 aufweisen, in deren Nachbarschaft die Windgeneratoren 12, 13 angeordnet sind. Das Solarpanel 11 und die Windgeneratoren 12, 13 ruhen auf einem Träger 16, von dessen beiden Enden 17, 18 Vertikalstreben 19, 20 aufragen. Diese tragen jeweils einen Generatorkopf 21, 22, der einen elektrischen Generator, vorzugsweise einen permanenterregten Synchrongenerator, beinhaltet und einen Rotor mit 23, 24 mit vorzugsweise horizontaler Drehachse trägt. Die Rotoren 23, 24 können zwei- oder mehrflügelig ausgebildet sein. Im einfachsten Fall laufen sie gleichsinnig drehend. Sie können aber auch gegensinnig drehend ausgebildet sein.

Die von den Vertikalstreben 19, 20 und dem Träger 16 gebildete Struktur ist vorzugsweise starr. Weiter vorzugsweise sind die Generatorköpfe 21, 22 an den Vertikalstreben 19, 20 unverdrehbar, d.h. starr befestigt.

Das Solarpanel 11 enthält Photovoltaikelemente, die vorzugsweise in einer einzigen Ebene angeordnet sind, wie aus Figur 2 erkennbar ist. In dieser ist der Träger 16 geschnitten dargestellt, sodass der Blick auf das Solarpanel 11 und den Windgenerator 13 frei ist. Wie erkennbar, ist das Solarpanel 11 mit dem Träger 16 um eine Horizontalachse 25 schwenkbar verbunden. Ein lediglich symbolisch veranschaulichter Schwenkantrieb 26 bestimmt dabei die Winkelposition des Solarpanels 11, das von einer nahezu senkrechten (stehenden) Position in eine horizontale (liegende) Position überführbar ist. Der Schwenkbereich des Solarpanels 11 beträgt vorzugsweise etwa 90°.

Der Träger 16 ist außerdem über einen Mastkopf 27 um eine Vertikalachse 28 schwenkbar mit dem oberen Ende eines Masts verbunden verbunden. Der Mast kann jede für den Anwendungsfalls bevorzugte Höhe aufwisen. Insbesondere kann er eine Höhe aufweisen, die ein Befahren des Bodens mit landwirtschaftlichem Gerät gestattet, um Agri-PV-Anwendungen zu ermöglichen. Zur Steuerung der Schwenkbewegung des horizontal angeordneten Trägers 16 um seine Vertikalachse 28 dient ein Motorstellantrieb 29, der ebenso wie der Schwenkantrieb 26 mit einer Steuerungseinrichtung 30 verbunden ist.

Die Steuerungseinrichtung 30 ist außerdem mit Mitteln zur Erfassung der Witterungssituation, insbesondere zur Erfassung der Stärke und Richtung der Sonneneinstrahlung sowie der Stärke und Richtung des vorhandenen Windes verbunden. Diese Mittel können, wie in Figur 2 schematisch veranschaulicht, durch eine Wetterstation 31 gebildet sein, die mit einer oder mehreren der erfindungsgemäßen Energiegewinnungsanlagen 10 verbunden sind. Auch ander Mittel zur Erfassung der aktuellen Stahlungs- und Windsituation oder auch Mittel zur vorausschauenden Kennzeichnung der zukünftigen Strahlungs- und Windsituation können vorgesehen sein. Diese Mittel können über Leitung, Funk, Netzwerk oder andere geeignete Datenübertragungsmittel mit der Steuerungseinrichtung 30 verbunden sein.

Die Steuerungseinrichtung 30 ist außerdem mit einer Wechselrichtereinheit 32 verbunden, deren Eingänge 33, 34 mit den Windgeneratoren 12, 13 und dem Solarpanel 14 verbunden sind. Die Wechselrichtereinheit 32 weist einen Ausgang 35 auf, der mit einem Energieversorgungsnetz 36 verbunden ist. Außerdem kann die Wechselrichtereinheit mit einem Energiespeicher, beispielsweise einem Akkumulator oder einer Akkumulatorenbatterie oder einer anderen Speichereinrichtung verbunden sein. Dazu kann sie einen Gleichspannungsausgang aufweisen.

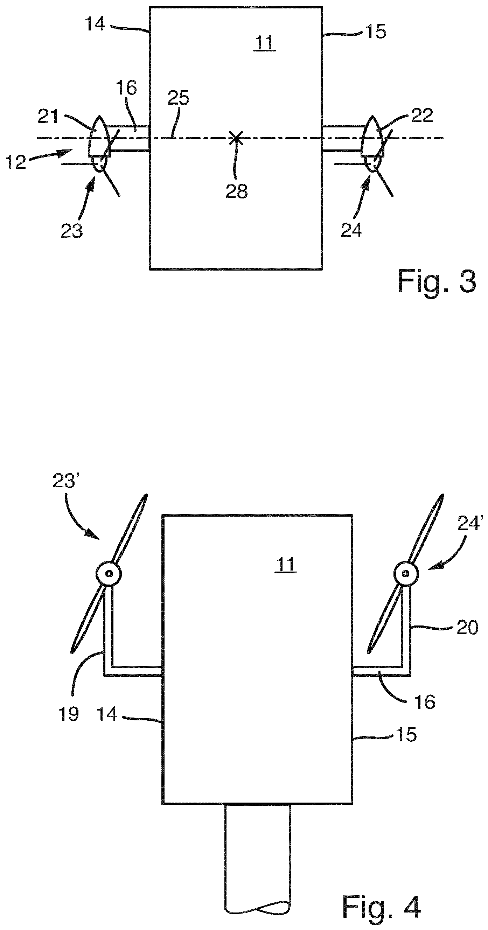

Die Energiegewinnungsanlage nach Figur 1 ist in Figur 3 in Draufsicht veranschaulicht. Die Rotoren 23, 24 weisen einen Radius auf, der vorzugsweise wenigstens etwas geringer ist als der Abstand ihrer Drehachsen zu den Seitenkanten 14, 15 des Solarpanels 11, sodass bei Drehung der Rotoren 23, 24 vorzugsweise kein Schatten über das Solarpanel 11 streift. Alternativ oder zusätzlich können die Rotoren 23, 24 mit einer Bremseinrichtung versehen sein, um bei Schwachwind in unverdrehbarer Stellung festgesetzt zu werden. Nimmt jeder dreiflüglige Rotor 23, 24 dabei die Stellung des Rotors 23 ein, bei der der Solarpanel abgewandte Rotorflügel horizontal orientiert ist, genügt es, wenn der Abstand der Drehachse des Windgenerators zu der Seitenkante 14 (bzw. 15) leidglich der halben Länge des Rotorflügels entspricht. Bei zweiflügeligen vertikal oder horizontal drehenden Rotoren 23', 24', wie sie in Figur 4 veranschaulicht sind, kann der Abstand zwischen der jeweiligen Rotordrehachse und der jeweiligen Seitenkante 14, 15 des Solarpanels 11 noch deutlich geringer gewählt werden. Es ist dabei vorteilhaft, wenn die Rotoren 23', 24' bei Solarbetrieb der Energiegewinnungsanlage 10 in Vertikalstellung blockiert sind, sodass ihre Ausrichtung mit den Vertikalstreben 19, 20 übereinstimmt. Die Rotorblätter liegen dann in einer Vertikalebene, die rechtwinklig zu der Ebene des Solarpaneels steht. Die genannten Ausrichtungen der Roteren bei reinem Solarbetrieb sind Rotorruhepositionen. Zum Halten des Rotors der Rotorruheposition kann eine Bremseinrichtung, z.B. eine Scheibenbremse, eine Bandbremse oder auch der elektrische Generator des Windgenerators genutzt werden. Dies gilt insbesondere, wenn der Generator ein permanenterregter Synchrongenerator ist.

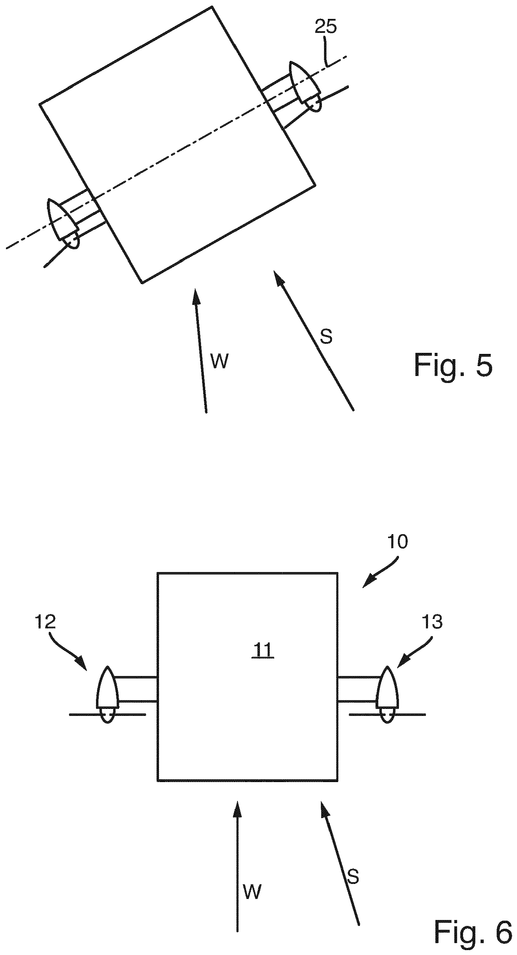

Die insoweit beschriebene Energiegewinnungsanlage 10 arbeitet wie folgt:
Zu Beginn oder während des Betriebs der Energiegewinnungsanlage 10 ermittelt die Steuerungseinrichtung 30 aus den von der Wetterstation 31 oder auf anderem Wege erhaltenen Daten zunächst die mit dem Solarpanel 11 erzielbare elektrische Leistung und die mit den Windgeneratoren 12, 13 erzielbare elektrische Leistung. Wenn die mit dem Solarpanel 11 erzielbare elektrische Leistung überwiegt, steuert die Steuerungseinrichtung 30 den Motorstellantrieb 29 so, dass der Träger 16 quer zur Sonneneinfallsrichtung gestellt wird. Außerdem stellt die Steuerungseinrichtung 30 den Schwenkantrieb 26 so, dass das Solarpanel 11 senkrecht zur Sonneneinstrahlung positioniert ist. Dabei kann die Steuerungseinrichtung 30 dazu eingerichtet sein, von den Windgeneratoren 12, 13 gelieferte Leistungsbeiträge zuzulassen, wenn , wie in Figur 5 veranschaulicht, der Wind W und die Sonnenstrahlung S aus der gleichen opder nahezu der gleichen Windrichtung kommen. Die Länge der Pfeile W und S kenzeichent den Windertrag und den Solarertrag, während die Pfeilrichtung die Himmelsrichtungen symbolisieren, aus denen der Wind und die Sonneneinstrahlung kommen.

Die Steuerungseinrichtung 30 steuert die Wechselrichtereinheit 32, dann so, dass vorwiegend die von dem Solarpanel 11 stammende elektrische Leistung in das Netz 36 (und/oder einen zugeordneten Speicher) geleitet wird. Von den Windgeneratoren 12, 13 gelieferte elektrische Leistung kann ebenfalls in das Netz 36 eingespeist werden.

Bei einer bevorzugten Ausführungsform ist die Steuerungseinrichtung 30 dazu eingerichtet, die Windgeneratoren 12, 13, wenn sie keinen oder nur geringen Beitrag liefern, stillzusetzen, sodass deren Rotorblätter keine rotierenden Schatten werfen. Vorzugsweise steuert die Steuerungseinrichtung 30 die Windgeneratoren 12, 13 dabei so, dass die Rotorflügel das Solarpanel 12 nicht überdecken, sondern der Schatten der Rotorblätter an den Seitenkanten 14, 15 des Solarpanels 11 vorbeiläuft. Eine solche Rotorstellung nimmt der Rotor 23 des Windgenerators 12 in Figur 3 ein. Im Falle der Ausführungsform nach Figur 4 stellt die Steuerungseinrichtung 30 die Rotorflügel der beiden Rotoren 23', 24' senkrecht.

Falls die Steuerungseinrichtung 30 anhand der von der Wetterstation 31 oder anderer Quelle gelieferten Daten feststellt, dass die mit den Windgeneratoren erzielbare elektrische Leistung die mit dem Solarpanel 11 erzielbare elektrische Leistung übersteigt, stellt sie das Solarpanel 11 durch entsprechende Ansteuerung des Schwenkantriebs 26 waagerecht und dreht durch Ansteuerung des Motorstellantriebs 29 den Träger 16 quer zum Wind. Diese Situation ist in Figur 5 veranschaulicht. Die Größe der mit dem Wind und der Sonne erzielbaren elektrischen Leistung ist in Figur 6 durch die Länge der Pfeile W (für Wind) und S (für Sonne) veranschaulicht. Die Pfeilrichtung markiert dabei die jeweilige Windrichtung bzw. solare Strahlungseinfallsrichtung.

In diesem Zustand kann die Energiegewinnungsanlage 10 die angebotene Windleistung optimal nutzen. Die Steuerungseinrichtung 30 weist die Wechselrichtereinheit 32 an, die von den Windgeneratoren 12, 13 gelieferte elektrische Spannung in Wechselspannung mit Netzfrequenz umzusetzen und den Strom, und mit diesem die Leistung, in das Netz 36 zu speisen. Eventuell anfallende elektrische Leistung des Solarpanels 11 kann verworfen oder mittels der Wechselrichtereinheit 32 gleichfalls in das Netz 36 eingespeist werden.

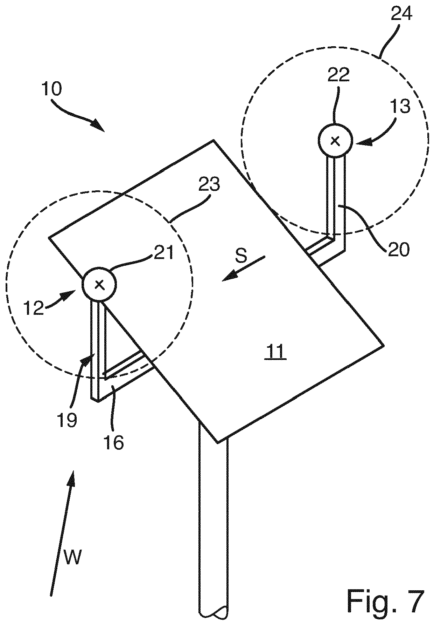

Die insoweit vorgestellte Energiegewinnungsanlage 10 ist in abgewandelter Ausführungsform in Figur 7 veranschaulicht. Für diese Ausführungsform gilt die vorige Beschreibung unter Zugrundelegung der bereits eingeführten Bezugszeichen mit Ausnahme folgender Merkmale entsprechend:

Die Generatorköpfe 21, 22 sind an den Vertikalstreben 19, 20 um eine Vertikalachse schwenkbar gelagert. Die Rotoren 23, 24 können deswegen unabhängig von der Stellung des Trägers 16 mit ihren Drehachsen parallel zum Wind W gestellt werden. Ebenso kann das Solarpanel 11 unabhängig davon rechtwinklig zur Sonne S gestellt werden. Der Wechselrichter 32 speist dann sowohl die von den Windgeneratoren 12, 13 als auch die von dem Solarpanel 11 gelieferte elektrische Leistung in das Netz 36 ein.

Die erfindungsgemäße Energiegewinnungsanlage 10 ist sowohl zur Windenergienutzung als auch zur Solarenergienutzung eingerichtet. Sie weist als zentrales Element einen horizontalen Träger 16 auf, der an seinen beiden Enden Windgeneratoren 12, 13 trägt, deren Drehachsen parallel zueinander und rechtwinklig zu dem Träger 16 orientiert sind. Vorzugsweise sind die Drehachsen der Rotoren somit in fester räumlicher Beziehung zu dem Träger 16 orientiert. Ein Solarpanel 11 ist hingegen zwischen den beiden Windenergiegeneratoren 12, 13 kippbar an dem Träger 16 gelagert, sodass es nach der Höhe der Sonne ausgerichtet werden kann. Überwiegt die mit den Windgeneratoren 12, 13 erzielbare elektrische Leistung, stellt die Steuereinrichtung 30 das Solarpanel 11 horizontal und dreht den Träger 16 quer zum Wind. Überwiegt hingegen die mit dem Solarpanel 11 erzielbare elektrische Leistung wird der Träger 16 nach der Himmelrichtung der Sonne und die Neigung des Solarpanels 11

nach der Höhe des Stands der Sonnen eingerichtet. Die Windgeneratoren 12, 13 können in diesem Zustand weiterlaufen oder, wie es bevorzugt wird, stillgesetzt werden.

### Bezugszeichen:

- 10: Energiegewinnungsanlage
- 11: Solarpaneel
- 12, 13: Windgeneratoren
- 14, 15: Seitenkanten
- 16: Träger
- 17, 18: Enden des Trägers 16
- 19, 20: Vertikalstreben
- 21, 22: Generatorkopf
- 23, 24: Rotor (auch 23', 24')
- 25: Horizontalachse
- 26: Schwenkantrieb
- 27: Mastkopf
- 28: Vertikalachse
- 29: Motorstellantrieb
- 30: Steuerungseinrichtung
- 31: Wetterstation
- 32: Wechselrichtereinheit
- 33, 34: Eingänge der Wechselrichtereinheit
- 35: Ausgang der Wechselrichtereinheit
- 36 37 38 39 40: Energieversorgungsnetz

## Patentansprüche

1. Energiegewinnungsanlage mit:
einem um eine Vertikalachse (28) drehbar gelagerten Träger (16),
einem Solarpaneel (11), das um eine Horizontalachse (25) schwenkbar an dem Träger (16) gelagert ist, Windgeneratoren (12, 13), die an Enden (17, 18) des Trägers (16) angeordnet sind, und
mit einer Steuerungseinrichtung (30), die zur Steuerung der Schwenkbewegung und Positionierung des Trägers (16) um die Vertikalachse (28) und zur Steuerung und Positionierung des Solarpaneels (11) um die Horizontalachse (25) eingerichtet ist.

2. Energiegewinnungsanlage nach Anspruch 1, **dadurch gekennzeichnet, dass** der Träger (16) horizontal angeordnet ist und dass er mittig an einem Drehkopf (27) gefasst ist, der um die Vertikalachse (28) drehbar und auf einem Mast angeordnet ist.

3. Energiegewinnungsanlage nach einem der vorstehenden Ansprüche, **dadurch gekennzeichnet, dass** der Träger (16) das Solarpaneel (11) zweiseitig überragend ausgebildet ist.

4. Energiegewinnungsanlage nach einem der vorstehenden Ansprüche, **dadurch gekennzeichnet, dass** jeder Windgenerator (12, 13) eine vertikal angeordnete Vertikalstrebe (19, 20) aufweist, deren unteres Ende mit einem der Enden (17, 18) des Trägers (16) verbunden ist.

5. Energiegewinnungsanlage nach einem der vorstehenden Ansprüche, **dadurch gekennzeichnet, dass** jeder Windgenerator (12, 13) einen Generatorkopf (21, 22) aufweist, an dem ein Rotor (23, 24) drehbar gelagert ist.

6. Energiegewinnungsanlage nach Anspruch 6, **dadurch gekennzeichnet, dass** der Rotor (23, 24) um eine Horizontalachse drehbar gelagert ist.

7. Energiegewinnungsanlage nach einem der vorstehenden Ansprüche, **dadurch gekennzeichnet, dass** die Windgeneratoren (12, 13) seitlich neben dem Solarpaneel (11) angeordnet sind.

8. Energiegewinnungsanlage nach einem der vorstehenden Ansprüche, **dadurch gekennzeichnet, dass** der Generatorkopf (21, 22) an der Vertikalstrebe (19, 20) starr gehalten ist.

9. Energiegewinnungsanlage nach einem der vorstehenden Ansprüche 1 bis 6, **dadurch gekennzeichnet, dass** der Generatorkopf (21, 22) um eine Vertikalachse drehbar an der Vertikalstrebe (19, 20) gelagert ist.

10. Energiegewinnungsanlage nach einem der vorstehenden Ansprüche, **dadurch gekennzeichnet, dass** die Steuerungseinrichtung (30) dazu eingerichtet ist, den Träger (16) und das Solarpaneel (11) nach dem Sonnenstand oder nach der Windrichtung auszurichten, je nachdem, ob die mit dem Solarpaneel (11) erzielbare elektrische Leistung oder die mit den Windgeneratoren (12, 13) erzielbare elektrische Leistung dominiert.

11. Energiegewinnungsanlage nach Anspruch 10, **dadurch gekennzeichnet, dass** die Steuerungseinrichtung (30) darauf eingerichtet ist, das Solarpaneel (11) in Horizontallage zu bringen, wenn die mit den Windgeneratoren (12, 13) erzielbare elektrische Leistung dominiert.

12. Wind- und Solarpark bestehend aus einer Vielzahl von Energiegewinnungsanlagen (10) nach einem der vorstehenden Ansprüche.

13. Verfahren zum Steuern einer Energiegewinnungsanlage (10) nach einem der vorstehenden Ansprüche,
wobei bei dem Verfahren die Intensität der Sonnenstrahlung und die Windstärke erfasst werden und daraus der erzielbare Solarertrag und der erzielbare Windertrag ermittelt werden, wobei
das Solarpaneel (11) nach der Sonne orientiert wird, wenn die mit dem Solarpaneel (11) erzielbare elektrische Leistung, und
die Windgeneratoren (12, 13) nach dem Wind orientiert werden, wenn die mit den Windgeneratoren (12, 13) erzielbare elektrische Leistung überwiegt.

14. Verfahren nach Anspruch 13, **dadurch gekennzeichnet, dass** das Solarpaneel (11) und die Windgeneratoren (12, 13) kumulativ betrieben werden, wenn die mit den Windgeneratoren (12, 13) erzielbare elektrische Leistung zwar überwiegt, aber dennoch Helligkeit vorhanden ist.

15. Verfahren nach Anspruch 13, **dadurch gekennzeichnet, dass** das Solarpaneel (11) und die Windgeneratoren (12, 13) kumulativ betrieben werden, wenn Richtung des einfallenden Sonnenlichts und die Windrichtung innerhalb eines Toleranzwinkels übereinstimmen.
